# EUROPEAN PATENT APPLICATION

(11) **EP 2 159 979 A1**
(43) Date of publication of application: **03.03.2010**
(21) Application number: 08105189.8
(22) Date of filing: 29.08.2008
(51) Int. Cl.: H04L 27/26

(54) **In-band ripple compensation**

(71) Applicant: Nokia Siemens Networks OY, 02610 Espoo (FI)
(72) Inventor: Calabro, Stefano, Dr., 81375 München (DE); Jelonnek, Björn, Dr., 89079 Ulm (DE); Wolff, Gunter, Dr., 89081 Ulm (DE)
(74) Representative: Bruglachner, Thomas E.

(57) **Abstract**

It is described a technique to compensate the in-band ripple of filters at the IFFT prior to filtering in the transmitter (100) or, for the receiver (200), in the FFT after filtering. A transmitter (100) comprises a multiplier (128) for multiplying at least one transmitter coefficient (130a, 130b) to an input signal (103a, 103b) of an inverse Fourier transformer (104) which is followed subsequent signal processing chain (108), thereby reducing a ripple on the output (110) of said signal processing chain (108). A receiver for receiving a transmission signal comprises a signal processing chain for processing the transmission signal a multiplier for multiplying at least one receiver coefficient to an output signal of a Fourier transformer to which the output of the signal processing chain is fed to thereby reduce a ripple on said output signal of said Fourier transformer.

## Description

### Field of invention

The present invention relates to the field of ripple compensation and in particular to ripple compensation induced by signals chains of a receiver / transmitter.

### Art Background

Modern modulator/demodulator implementations for signal transmission often use a Fourier transformation on the receiver side and an inverse Fourier transformation on the transmitter side. One example is orthogonal frequency division multiplexing (OFDM) which is a frequency-division multiplexing scheme utilizing a large number of subcarriers to transmit data. The subcarriers are orthogonal to each other. For example, on the transmitter side complex valued input symbols are fed into an inverse Fourier transformer, yielding a single data stream which is further processed and filtered by a signal processing chain.

Digital filters induce in-band ripple to the signal which may contribute to the signal error. Especially for short filters with small signal delay this ripple can be considerably high. In the transmitter, the in-band ripple may directly contribute to the signal error (e.g. EVM). Following the current EVM definition in the E-UTRA standard 3GPP TS 36.104, the spectrally flat channel estimation will transform the in-band ripple directly into signal error (EVM).

Though a receiver may have a more efficient channel estimation than defined in the above E-UTRA standard, the channel estimation will add a certain percentage of the pilot noise to the input signal. Pilots are a known part of the received signal, from which the channel estimation is obtained, but they suffer from noise the same way, the other signal parts do. Depending on the amount of averaging, the noise contribution can be reduced at the cost of a slower or spectrally more flat channel estimation. Generally, a flat estimation will have less noise contribution then an accurate one. This noise desensitizes the receiver. But on the other hand, a flat channel estimation will transform the filter ripple directly into signal error, whereas an accurate estimation can compensate the ripple without any impact on the signal quality.

Thus, for a filter with considerable in-band ripple there is a trade-off between signal error and noise insertion. The in-band ripple can be minimized by using longer filter impulse responses, but not omitted completely. Longer filters introduce more signal delay and higher implementation effort. Also the utilization of certain infinite impulse response (IIR) filters may help to reduce the in-band ripple at lower implementation effort, but these filters do not reduce signal delay and tend to suffer from group delay deviation. Moreover, an adaptive channel estimation can help to find a reasonable trade-off for the above error-noise problem. But especially for low signal to noise ratios, the impact of the filter ripple on the signal error is rising.

In view of the above-described situation, there exists a need for an improved technique that enables to improve data transmission, while substantially avoiding or at least reducing one or more of the above-identified problems.

### Summary of the Invention

This need may be met by the subject matter according to the independent claims. Advantageous embodiments of the present invention are described by the dependent claims.

The herein disclosed subject matter is based on the idea of the inventors that the removal of in-band ripple will improve receiver performance. Removal of in-band ripple may be employed on the transmitter side, the receiver side, or both, the transmitter side and the receiver side.

According to a first aspect of the herein disclosed subject matter there is provided a transmitter comprising (a) a multiplier for multiplying at least one transmitter coefficient to an input signal, thereby yielding a modified input signal; (b) an inverse-Fourier transformer for receiving said modified input signal in a frequency domain and for outputting an respective inverse-Fourier transformed output signal in a time domain; and (c) a signal processing chain for processing the output signal of the inverse-Fourier transformer and outputting a processed signal; (d) wherein said at least one transmitter coefficient is adapted for reducing a ripple on said processed signal, said ripple being induced by said signal processing chain.

In this way, signal processing chain induced ripple may be effectively removed from the processed signal at the output of the signal processing chain.

According to an illustrative embodiment, the multiplier is provided exclusively for multiplying the at least one transmitter coefficient to the input signal. However according to other illustrative embodiments, the multiplier is also provided for multiplying other coefficients to the input signal.

According to an illustrative embodiment of the first aspect, said multiplier is adapted for multiplying a respective transmitter coefficient to the signal on each of a plurality of inputs of the inverse-Fourier transformer.

According to a further illustrative embodiment, each of said plurality of inputs of the inverse-Fourier transformer corresponds to an orthogonal frequency division multiplex (OFDM) subcarrier. For example, according to an illustrative embodiment, the number of inputs is equal to the number of subcarriers. According to other illustrative embodiments, the number of inputs is larger than the number of subcarriers.

According to a further illustrative embodiment, said at least one transmitter coefficient is obtained from an inverted composite filter impulse response of at least part of said signal processing chain.

According to a further illustrative embodiment, the transmitter coefficient of each OFDM subcarrier is obtained by:
- Generating or determining a composite filter impulse response of at least part of said signal processing chain, e.g of some elements or of all elements of said signal processing chain.
- Fourier transforming said composite filter impulse response into the frequency domain.
- Selecting an in-band range of said Fourier transformed composite filter impulse response, wherein said selected in-band range corresponds to the usable OFDM subcarriers. According to an illustrative embodiment, the in-band range represents the set of usable OFDM subcarriers.
- Inverting the respective Fourier transformed composite filter impulse response value of each usable OFDM subcarrier to obtain the respective transmitter coefficient.

According to a further illustrative embodiment, the transmitter further comprises an antenna for transmitting said processed signal over an air interface. According to other embodiments, the transmitter comprises a wire-based interface for transmitting said processed signal over one or more wires.

According to a second aspect of the herein disclosed subject matter there is provided a receiver for receiving a transmission signal, the receiver comprising (a) a signal processing chain for processing said transmission signal and outputting a processed signal, (b) a Fourier transformer for receiving said processed signal and outputting an respective Fourier transformed output signal in a frequency domain, and (c) a multiplier for multiplying at least one receiver coefficient to said output signal of said Fourier transformer, thereby yielding a modified output signal, wherein (d) said at least one receiver coefficient is adapted for reducing a ripple on said modified output signal of said Fourier transformer, said ripple being induced by said signal processing chain.

Hence, compared with the output signal at the output of the Fourier transformer the modified output signal has a reduced ripple.

According to an illustrative embodiment of the second aspect, the multiplier is provided exclusively for multiplying the at least one receiver coefficient to the output signal. However according to other illustrative embodiments, the multiplier is also provided for multiplying other coefficients to the input signal, e.g. coefficients of a channel estimation.

According to an illustrative embodiment of the second aspect, said multiplier is adapted for multiplying a respective receiver coefficient to the signal on each of a plurality of outputs of said Fourier transformer.

According to a further illustrative embodiment each of said plurality of outputs of said Fourier transformer corresponds to an orthogonal frequency division multiplex (OFDM) subcarrier.

According to a further illustrative embodiment, said at least one receiver coefficient is obtained from an inverted composite filter impulse response of at least part of said signal processing chain.

According to a further illustrative embodiment, the receiver coefficient of each OFDM subcarrier is obtained by:
- Generating an composite filter impulse response of at least part of said signal processing chain.
- Fourier transforming said composite filter impulse response into the frequency domain.
- Selecting an in-band range of said Fourier transformed composite filter impulse response, wherein said selected in-band range corresponds to the usable OFDM subcarriers. According to an illustrative embodiment, the in-band range represents the set of usable OFDM subcarriers.
- Inverting said Fourier transformed composite filter impulse response value of each usable OFDM subcarrier to obtain the respective receiver coefficient.

According to a further illustrative embodiment, the receiver further comprises an antenna for receiving said transmission signal over an air interface. According to other embodiments, the receiver comprises a wire-based interface for receiving said transmission signal over one or more wires. It should be noted, that according to an illustrative embodiment, the transmission signal at the receiver corresponds to the respective above mentioned processed signal of transmitter.

According to a third aspect of the herein disclosed subject matter there is provided a method for operating a transmitter, the method comprising multiplying at least one transmitter coefficient to an input signal of an inverse-Fourier transformer, wherein said at least one transmitter coefficient is adapted for reducing ripple on a processed signal which is an output of said inverse-Fourier transformer processed by a signal processing chain, said ripple being induced by said signal processing chain.

According to a fourth aspect of the herein disclosed subject matter there is provided a method for operating a receiver, the method comprising multiplying at least one receiver coefficient to an output signal of a Fourier transformer, wherein said Fourier transformer is provided for transforming an output of a signal processing chain into a frequency domain, and wherein said at least one receiver coefficient is adapted for reducing a ripple on said output signal of said Fourier transformer, said ripple being induced by said signal processing chain.

According to a fifth aspect of the herein disclosed subject matter there is provided a device. According to an illustrative embodiment of the fifth aspect, the device comprises a transmitter according to the first aspect or at least one embodiment thereof. According to a further illustrative embodiment, the device comprises a receiver according to the second aspect or at least one embodiment thereof. According to a still further illustrative embodiment, the device comprises a transmitter according to the first aspect or at least one embodiment thereof and a receiver according to the second aspect or at least one embodiment thereof.

In the following there will be described exemplary embodiments of the subject matter disclosed herein with reference to a transmitter, a receiver and respective methods for operating a transmitter and for operating a receiver. It has to be pointed out that of course any combination of features relating to different aspects of the herein disclosed subject matter is also possible. In particular, some embodiments have been described with reference to apparatus type claims whereas other embodiments have been described with reference to method type claims. Further, some embodiments have been described with reference to a transmitter whereas other embodiments have been described with reference to a receiver. However, a person skilled in the art will gather from the above and the following description that, unless otherwise notified, in addition to any combination of features or embodiments belonging to one aspect also any combination between features or embodiments relating to different aspects, for example even between features of the apparatus type claims and features of the method type claims or between features or details of a receiver and a transmitter is considered to be disclosed with this application.

The aspects defined above and further aspects of the present invention are apparent from the examples of embodiments to be described hereinafter and are explained with reference to the examples and embodiments. The herein disclosed subject matter will be described in more detail hereinafter with reference to examples and embodiments but to which the invention is not limited.

### Brief Description of the Drawings

Figure 1 schematically shows an OFDM transmitter in accordance with illustrative embodiments of the herein disclosed subject matter.
Figure 2 schematically shows an OFDM receiver in accordance with illustrative embodiments of the herein disclosed subject matter.
Figure 3 schematically shows a device having a transmitter and a receiver in accordance with illustrative embodiments of the herein disclosed subject matter.

### Detailed Description

The illustration in the drawings is schematic. It is noted that in different figures, similar or identical elements are provided with the same reference signs or with reference signs, which are different from the corresponding reference signs only within the first digit.

One idea behind the herein disclosed subject matter is to compensate the in-band ripple of filters at the IFFT prior to filtering in the transmitter or, for the receiver, in the FFT after filtering. Doing so, the in-band ripple filter requirements can be even relaxed without performance degradation, thus reducing implementation effort and signal delay.

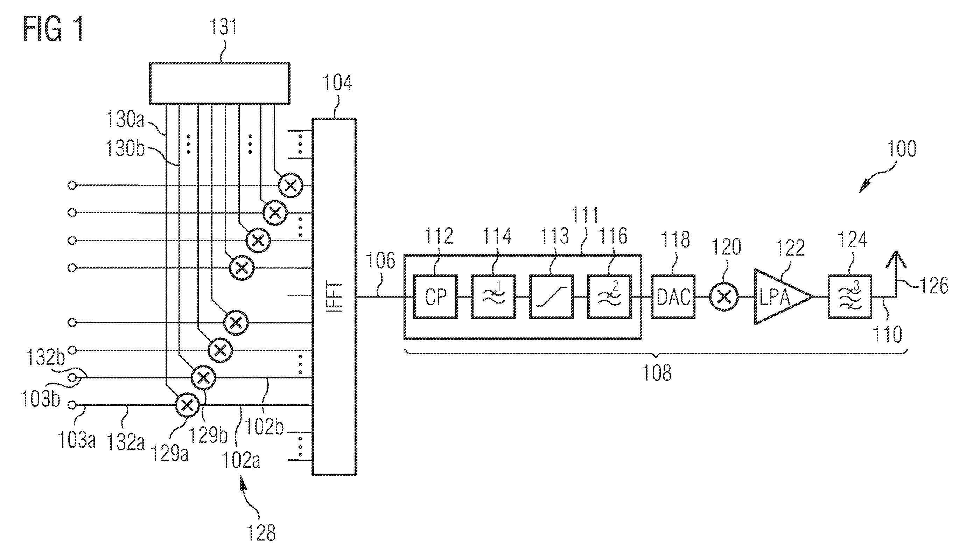

Fig. 1 illustrates a simplified example for an OFDM based transmitter 100. A modified input signal 102a, 102b in the form of complex valued input symbols is fed into an inverse Fourier transformer 104, e.g. an inverse Fast-Fourier transformer IFFT in the depicted example, yielding a single data stream as inverse-Fourier transformed output signal 106 in a time domain. The transmitter 100 further comprises a signal processing chain 108 for subsequent signal processing of the output signal 106 of the inverse-Fourier transformer 104 and outputting a processed signal 110.

The signal processing chain 108 may include a digital signal processing and filtering section 111 which itself may contain several operations and respective entities to carry out the operations, such as cyclic prefix insertion (CP) by a respective unit 112, clipping (limiting characteristics) by a respective unit 113, oversampling (not drawn here), digital frequency offset and other. Moreover it may include several filters or filter chains, which are numbered with filter 1 at 114 and filter 2 at 116 in Fig. 1. According to the spectrum emission mask and other signal requirements, these filters have to provide a certain out-of-band attenuation. After a digital to analog conversion (DAC) by a DAC converter 118, the signal may be upconverted by a mixing stage 120 to the transmit radio frequency and amplified thereafter by a linear power amplifier (LPA) 122. To prevent unwanted emissions, the signal has to pass a filter 3, indicated at 124 in Fig. 1, before it is transmitted via an antenna 126.

According to an illustrative embodiment shown in Fig. 1, the signal processing chain 108 comprises the elements 112, 114, ###, 116, 118, 120, 122, 124 identified above. However, it should be noted that this is only exemplary and a signal processing chain under consideration may contain further elements or may contain only part of the above mentioned elements. Generally, the transmitter may include other components or more instances of a component. However, this is not essential for the invention.

The transmitter shown in Fig. 1 comprises a multiplier 128 for multiplying at least one transmitter coefficient 130a, 130b to an input signal 103a, 103b, thereby yielding the modified input signal 102a, 102b which is fed into the inverse-Fourier transformer 104. The transmitter coefficients 130a, 130b are adapted for reducing a signal processing chain induced ripple on said processed signal 110. Thus the transmitter coefficients 130a, 130b can be regarded as in-band ripple compensation coefficients, which are applied to the "frequency domain" signal. The transmitter coefficients can be calculated from an FFT operation of the corresponding filter impulse response of the signal processing chain or of the respective part of the signal processing chain under consideration.

According to an illustrative embodiment, the multiplier comprises a multiplier element 129a, 129b for each transmitter coefficient 130a, 130b to be multiplied with the respective input signal 103a, 103b.

According to an illustrative embodiment, the at least one transmitter coefficient is stored in a storage device 131 of the transmitter. According to an illustrative embodiment, the at least one transmitter coefficient may be stored in the storage device 131 during manufacture of the transmitter. According to a further illustrative embodiment, the at least one transmitter coefficient is stored in the storage device 131 after manufacture of the transmitter 100, e.g. during a firmware update or during a software update of the transmitter 100.

According to another illustrative embodiment, the at least one transmitter coefficient may be determined for each manufactured signal processing chain separately, e.g. by measuring the impulse response of the signal processing chain 108 after assembling the signal processing chain 108. According to another illustrative embodiment, the at least one transmitter coefficient may be determined for one representative signal processing chain or for a set of representative signal processing chains and may then be stored in the storage devices 131 of a plurality of transmitters 100, without determining the at least one transmitter coefficient for each transmitter 100 individually.

According to an illustrative embodiment, said inverse-Fourier transformer has a plurality of inputs each of which corresponds to an orthogonal frequency division multiplex (OFDM) subcarrier. According to an illustrative embodiment shown in Fig. 1, the inverse Fourier transformer has one input line 132a, 132b for each OFDM subcarrier used. The multiplier 128 is adapted for multiplying a respective transmitter coefficient to the signal on the respective input of the inverse-Fourier transformer. That is, in terms of the transmitter shown in Fig. 1, the multiplier 128 is adapted for multiplying a respective transmitter coefficient 130a, 130b to the signal on the corresponding input line 132a, 132b of the IFFT 104. It should be noted that although only two transmitter coefficients 130a, 130b and only two input lines 132a, 132b have been referenced by reference numbers, the multiplier is usually adapted to multiply transmitter coefficients to a large number of subcarriers, e.g. 300 subcarriers.

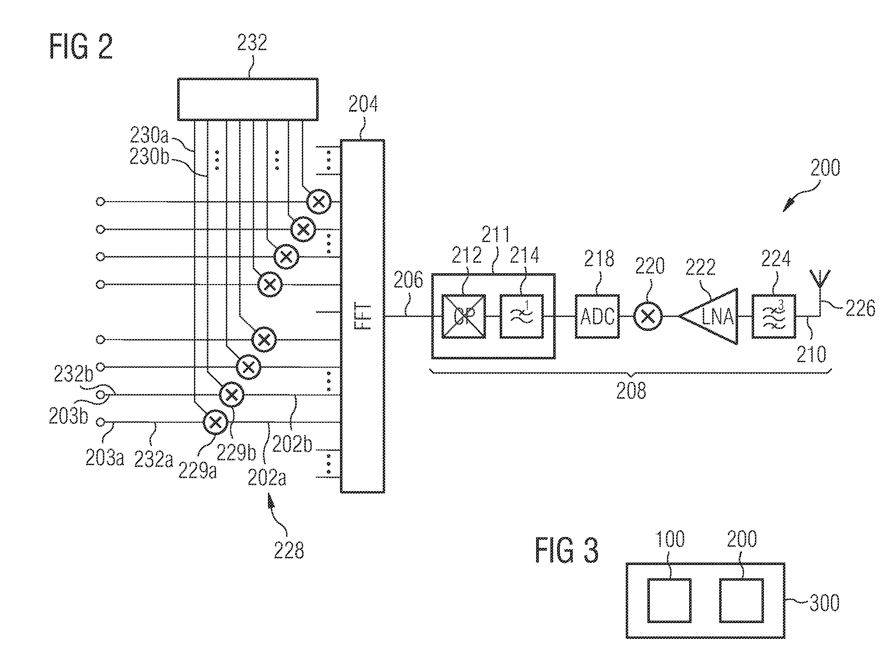

Similar to Fig. 1, Fig. 2 illustrates a simplified example for the corresponding receiver 200. Here, the signal path goes the other way round. A transmission signal 210 in the form of an antenna input signal is received by an antenna 226. The transmission signal is filtered by a filter 3, indicated at 224, amplified by a low noise amplifier (LNA) 222 and downconverted in frequency by a downconverter 220. After an analog to digital (ADC) conversion by ADC converter 218, the signal passes through the digital signal processing and filtering block 211. Besides filtering with a filter 1, indicated at 214, this block may contain several operations, like cyclic prefix removal in the unit 212, decimation, digital frequency offset, gain control and other (not shown in Fig. 2).

The elements 212, 214, 218, 220, 222, 224 form a signal processing chain 208 of the receiver 200 which provides a processed signal 206. However, as discussed with the transmitter above, it should be noted that this is only exemplary and a signal processing chain under consideration may contain further elements or may contain only part of the above mentioned elements of the signal processing chain 208.

The processed signal 206 is provided to a Fourier transformer 204, e.g. a fast Fourier transformer (FFT) as shown in Fig. 2, which in turn delivers a respective Fourier transformed output signal 202a, 202b, e.g. output symbols, in a frequency domain.

The receiver 200 further comprises a multiplier 228 for multiplying at least one receiver coefficient 230a, 230b to said output signal 202a, 202b of said Fourier transformer, thereby yielding a modified output signal 203a, 203b. The receiver coefficients are adapted for reducing a ripple on the modified output signal 203a, 203b of said Fourier transformer. The ripple is a ripple which is induced by said signal processing chain. It should be noted that according to an illustrative embodiment, the output signal 202a, 202b and the modified output signal 203a, 203b differ only in that the signal processing chain induced ripple is reduced on the modified output signal 203a, 203b.

According to an illustrative embodiment, the multiplier 228 comprises a multiplier element 229a, 229b for each receiver coefficient 230a, 230b to be multiplied to the respective output signal 202a, 202b.

According to an illustrative embodiment shown in Fig. 2, the inverse Fourier transformer has one output line 232a, 232b for each OFDM subcarrier used.

Since the number of usable subcarriers of the receiver corresponds to the number of usable subcarriers of the transmitter, it should be understood that although only two transmitter coefficients 230a, 230b and only two output lines 232a, 232b have been indicated with reference numbers, the multiplier is usually adapted to multiply transmitter coefficients to a respective large number of subcarriers, e.g. 300 subcarriers.

According to an illustrative embodiment, the at least one receiver coefficient 230a, 230b is stored in a storage device 231 of the receiver 200. According to further illustrative embodiments, storing the at least one receiver coefficient 230a, 230b is done in an analogous way as the storing of the transmitter coefficient 130a, 130b in the storage device 131 of the transmitter, e.g. during manufacture of the receiver.

According to illustrative embodiments, the transmitter and the receiver are adapted for wireless communication, like the transmitter 100 of Fig. 1 and the receiver 200 of Fig. 2. According to other illustrative embodiments, the receiver and the transmitter are adapted for communication over wires (not shown).

Fig. 3 shows a device 300 having a transmitter 100 and a receiver 200 in accordance with illustrative embodiments of the herein disclosed subject matter. The device 300 may be for example a user equipment, e.g. a mobile station such as cell phone. Further, according to other illustrative embodiments, the device 300 is a network component, e.g. a base station of a mobile communications network.

Next, an illustrative embodiment of a method for determination of the ripple compensation coefficients, i.e. the transmitter coefficient and the receiver coefficients is described.

According to this illustrative embodiment of the herein disclosed subject matter, the ripple compensation coefficients are generated with the following procedure:
1. Obtain the corresponding filter impulse response
2. Transform the corresponding filter impulse response into "frequency domain"
3. Select the in-band range
4. Invert the coefficients

According to a further illustrative embodiments, these four steps are carried out as follows:
1.
   In an illustrative embodiment, the composite filter impulse response is obtained from a convolution of all filter impulse responses in the main signal path, oversampled to the highest sampling rate. A further illustrative embodiment without additional oversampling could exclude the interpolation filters, used for oversampling, thus staying with the basic sampling rate. According to a still further illustrative embodiment, the high sampling rate composite impulse response could be decimated to the basic sampling rate. It should be noted that according to an illustrative embodiment, only the usable OFDM subcarriers are taken into account, i.e. those subcarriers which possibly can be used for data transmission. Hence in this embodiment, subcarriers which are not designated to be used are not taken into account.
2.
   According to an illustrative embodiment the transformation of the composite filter impulse response into frequency domain is done by an FFT operation. If the filter impulse response is obtained for the basic sampling rate, the FFT size is equivalent to the number of all FFT subcarriers (useable subcarriers and not usable subcarriers). The FFT size has to be enlarged, if oversampling is applied.
3.
   According to an illustrative embodiment, the in-band range involves all possibly used subcarriers. In other words, only the possibly used subcarriers are considered in the next step (step 4). The remaining subcarrier values are not of interest and can be removed completely. However, it should be noted, that according to illustrative embodiments, the selection of the in-band range is omitted and the ripple compensation coefficients are determined for all subcarriers.
4.
   The used subcarrier values are inverted, using the 1/x function. This will yield the desired ripple compensation coefficients, i.e. the transmitter coefficient or the receiver coefficient.

According to an illustrative embodiment, the above procedure (items 1. to 4.) has to be carried out only once for both, receiver and transmitter. In the transmitter case, the subcarrier specific coefficients are multiplied to the IFFT input data. Thus, each subcarrier has its own fixed coefficient. In the receiver it's just the opposite. Here, the subcarrier specific multiplication is carried out after FFT operation.

As a result, the in-band ripple introduced by the considered filters is compensated and a very flat frequency response is achieved.

In the following, some effects of illustrative embodiments of the herein disclosed subject matter on measurable signals are described.

Having regard to the transmitter, illustrative embodiments of the invention result in an extremely (perfectly) flat output spectrum at the TX antenna, meaning that there is almost no pseudo-periodic ripple. Further, illustrative embodiments allow a short signal delay due to the presence of very short digital filters with a quite short impulse response.

Illustrative embodiments of the invention may further influence a signal spectrum on the interface between baseband module and RF module. Since this interface is standardised and well established (e.g. CPRI or OBSAI), the investigation is very simple. In conventional systems, the signal spectrum over this interface should show an (undesired) very weak pseudo-periodic in-band ripple of around 0.2 dB, which is quite characteristic. For example, there is a typical "periodicity", ranging over several subcarriers. By using illustrative embodiments of the herein disclosed subject matter, this ripple is significantly higher because it is intended to compensate the imperfections of the subsequent filter chain. Further, for devices which employ illustrative embodiments of the herein disclosed subject matter the pseudo-periodic in-band ripple on the digital TX interface is larger than the ripple at the antenna output.

Having regard to the receiver, on the digital RX interface between the RF and the baseband modules, the in-band ripple may be considerably large in some illustrative embodiments, in the sense that this would not fulfill the radio standard requirements, e.g. in the case of relaxed RX filters which are possible if a ripple compensation according to illustrative embodiments is employed.

According to embodiments of the invention, any suitable component of the transmitter or the receiver, e.g. the multiplier, the Fourier transformer, the inverse-Fourier transformer, or elements of the signal processing chain, may be provided in the form of respective computer program products which enable a processor to provide the functionality of the respective elements as disclosed herein. According to other embodiments, any such component may be provided in hardware. According to other - mixed - embodiments, some components may be provided in software while other components are provided in hardware.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

In order to recapitulate the above described embodiments of the present invention one can state:

It is described a technique to compensate the in-band ripple of filters at the IFFT prior to filtering in the transmitter or, for the receiver, in the FFT after filtering. A transmitter comprises a multiplier for multiplying at least one transmitter coefficient to an input signal of an inverse Fourier transformer which is followed by a subsequent signal processing chain, thereby reducing a ripple on the output of said signal processing chain. A receiver for receiving a transmission signal comprises a signal processing chain for processing the transmission signal a multiplier for multiplying at least one receiver coefficient to an output signal of a Fourier transformer to which the output of the signal processing chain is fed to thereby reduce a ripple on said output signal of said Fourier transformer.

### List of reference signs:

- 100: transmitter
- 102a, 102b: modified input signal
- 103a, 103b: input signal
- 104: inverse Fourier transformer
- 106: output signal
- 108: signal processing chain
- 110: processed signal
- 111: digital signal processing and filtering section
- 112: cyclic prefix insertion unit
- 113: clipping unit
- 114: filter
- 116: filter
- 118: digital to analog converter
- 120: mixing stage
- 122: linear power amplifier
- 124: filter
- 126: antenna
- 128: multiplier
- 129a, 129b: multiplier element
- 130a, 130b: transmitter coefficient
- 131: storage device
- 132a, 132b: input line
- 200: receiver
- 202a, 202b: output signal
- 203a, 203b: modified output signal
- 204: inverse Fourier transformer
- 206: processed signal
- 208: signal processing chain
- 210: transmission signal
- 211: digital signal processing and filtering section
- 212: cyclic prefix removal unit
- 214: filter
- 218: analog to digital converter
- 220: downconverter
- 222: low noise amplifier
- 224: filter
- 226: antenna
- 228: multiplier
- 229a, 229b: multiplier element
- 230a, 230b: receiver coefficient
- 231: storage device
- 232a, 232b: output line
- 300: device comprising transmitter 100 and receiver 200

### List of abbreviations:

- 3GPP: 3rd Generation Partnership Project
- ADC: Analog to Digital Converter
- CP: Cyclic Prefix
- CPRI: Common Public Radio Interface
- DAC: Digital to Analog Converter
- E-UTRA: Evolved UTRA, sometimes appearing as LTE
- EVM: Error Vector Magnitude
- FFT: Fast Fourier Transform
- IFFT: Inverse FFT
- IIR: Infinite Impulse Response
- LNA: Low Noise Amplifier
- LPA: Linear Power Amplifier
- LTE: Long Term Evolution
- OBSAI: Open Base Station Architecture Interface
- OFDM: Orthogonal Frequency Division Multiplex
- RRH: Remote Radio Head
- RX: Receiver
- TX: Transmitter
- UTRA: Universal Terrestrial Radio Access

## Claims

1. Transmitter (100) comprising:
- a multiplier (128) for multiplying at least one transmitter coefficient (130a, 130b) to an input signal (103a, 103b), thereby yielding a modified input signal (102a, 102b);
- an inverse-Fourier transformer (104) for receiving said modified input signal (102a, 102b) in a frequency domain and for outputting an respective inverse-Fourier transformed output signal (106) in a time domain; and
- a signal processing chain (108) for processing the output signal (106) of the inverse-Fourier transformer and outputting a processed signal (110);
- wherein said at least one transmitter coefficient (130a, 130b) is adapted for reducing a ripple on said processed signal (110), said ripple being induced by said signal processing chain (108).

2. Transmitter (100) according to claim 1, wherein said multiplier (128) is adapted for multiplying a respective transmitter coefficient (130a, 130b) to the signal on each of a plurality of inputs (132a, 132b) of the inverse-Fourier transformer (104).

3. Transmitter (100) according to claim 2, wherein each of said plurality of inputs (132a, 132b) of the inverse-Fourier transformer corresponds to an orthogonal frequency division multiplex (OFDM) subcarrier.

4. Transmitter (100) according to one of the preceding claims, wherein said at least one transmitter coefficient (130a, 130b) is obtained from an inverted composite filter impulse response of at least part of said signal processing chain (108).

5. Transmitter (100) according to claim 3, wherein the transmitter coefficient (130a, 130b) of useable OFDM subcarriers is obtained by
- generating an composite filter impulse response of at least part of said signal processing chain (108);
- Fourier transforming said composite filter impulse response into the frequency domain;
- selecting an in-band range of said Fourier transformed composite filter impulse response, wherein said selected in-band range corresponds to the usable OFDM subcarriers;
- inverting a respective Fourier transformed composite filter impulse response value of each usable OFDM subcarrier to obtain the respective transmitter coefficient.

6. Transmitter (100) according to one of the preceding claims, further comprising an antenna (126) for transmitting said processed signal (110) over an air interface.

7. Receiver (200) for receiving a transmission signal (210), the receiver (200) comprising:
- a signal processing chain (208) for processing said transmission signal (210) and outputting a processed signal (206);
- a Fourier transformer (204) for receiving said processed signal (206) and outputting an respective Fourier transformed output signal (202a, 202b) in a frequency domain;
- a multiplier (228) for multiplying at least one receiver coefficient (230a, 230b) to said output signal (202a, 202b) of said Fourier transformer thereby yielding a modified output signal (203a, 203b), wherein
- said at least one receiver coefficient (230a, 230b) is adapted for reducing a ripple on said modified output signal (203a, 203b), said ripple being induced by said signal processing chain.

8. Receiver (200) according to claim 7, wherein said multiplier (228) is adapted for multiplying a respective receiver coefficient (230a, 230b) to the signal of each of a plurality of outputs (232a, 232b) of said Fourier transformer (204).

9. Receiver (200) according to claim 8, wherein each of said plurality of outputs (232a, 232b) of said Fourier transformer (204) corresponds to an orthogonal frequency division multiplex (OFDM) subcarrier.

10. Receiver (200) according to one of claims 7 to 9, wherein said at least one receiver coefficient (230a, 230b) is obtained from an inverted composite filter impulse response of at least part of said signal processing chain (208).

11. Receiver according to claim 9, wherein the receiver coefficients (230a, 230b) of useable OFDM subcarriers are obtained by
- generating an composite filter impulse response of at least part of said signal processing chain (208);
- Fourier transforming said composite filter impulse response into the frequency domain;
- selecting an in-band range of said Fourier transformed composite filter impulse response, wherein said selected in-band range corresponds to the usable OFDM subcarriers;
- inverting a respective Fourier transformed composite filter impulse response value of each usable OFDM subcarrier to obtain the respective receiver coefficient.

12. Receiver according to one of claims 7 to 11, further comprising an antenna (226) for receiving said transmission signal (210) over an air interface.

13. Method for operating a transmitter (100), the method comprising:
- multiplying at least one transmitter coefficient (130a, 130b) to an input signal (103a, 103b) of an inverse-Fourier transformer (104),
- wherein said at least one transmitter coefficient (130a, 130b) is adapted for reducing ripple on a processed signal (110) which is an output of said inverse-Fourier transformer (104) processed by a signal processing chain (108), said ripple being induced by said signal processing chain (108).

14. Method for operating a receiver (200), the method comprising:
- multiplying at least one receiver coefficient (230a, 230b) to an output signal (202a, 202b) of a Fourier transformer (204) for transforming an output (206) of a signal processing chain (208) into a frequency domain,
- wherein said at least one receiver coefficient (230a, 230b) is adapted for reducing a ripple on said output signal (202a, 202b) of said Fourier transformer (204), said ripple being induced by said signal processing chain (208).

15. Device (300) comprising a transmitter (100) according to one of claims 1 to 6 and/or a receiver (200) according to one of claims 7 to 12.
